# EUROPÄISCHE PATENTANMELDUNG

(11) **EP 3 002 341 A1**
(43) Veröffentlichungstag der Anmeldung: **06.04.2016**
(21) Anmeldenummer: 14186958.6
(22) Anmeldetag: 30.09.2014
(51) Int. Cl.: C21C 5/35, C21C 5/46, F27D 21/00, C21C 5/52, F27D 19/00

(54) **Verfahren und Vorrichtung zum Bestimmen des Zeitpunktes der Zündung bei einem Sauerstoffblasverfahren**

(71) Anmelder: Primetals Technologies Austria GmbH, 4031 Linz (AT)
(72) Erfinder: Rohrhofer, Andreas, 4020 Linz (AT); Voglmayr, Bernhard, 4020 Linz (AT); Fischer, Paul, 4040 Linz (AT); Hartl, Franz, 4020 Linz (AT); Weinzinger, Michael, 4020 Linz (AT)
(74) Vertreter: Metals@Linz

(57) **Zusammenfassung**

Die Erfindung betrifft ein Verfahren zum Bestimmen des Zeitpunktes der Zündung bei einem Sauerstoffblasverfahren, insbesondere beim LD-Verfahren, in einem Konverter (1) wobei mit mindestens einem dem Konverter (1) zugeordneten Schallwandler (100) ein akustisches Signal aufgenommen wird, und wobei durch einen Vergleich des akustischen Signals mit einem vorgegebenen Referenzsignal ein Vergleichswert ermittelt wird und jener Zeitpunkt, bei dem der Vergleichswert unterhalb eines vorab festgelegten Grenzwertes liegt als Zeitpunkt der Zündung festlegt wird.

Auch betrifft die Erfindung eine Vorrichtung, welche sich insbesondere zum Durchführen des Verfahrens eignet.

## Beschreibung

Die Erfindung betrifft ein Verfahren zum Bestimmen des Zeitpunktes der Zündung beim Aufblasverfahren, insbesondere beim LD-Verfahren, in einem Konverter, indem mit einem dem Konverter zugeordneten Schallwandler ein akustisches Signal aufgenommen wird, sowie eine entsprechende Vorrichtung.

Ziel der Stahlerzeugung ist es, Stahl, also Eisenlegierungen mit geringem Kohlenstoffgehalt und gewünschten Eigenschaften wie Härte, Rostbeständigkeit oder Verformbarkeit, herzustellen.

Bei den Blasverfahren wird das Roheisen mit Sauerstoff gefrischt. Der Oxidationsprozess, der den Kohlenstoffanteil senkt (das Frischen), liefert in diesen Verfahren genug Wärme, um den Stahl flüssig zu halten, eine externe Wärmezufuhr ist in den Konvertern deshalb nicht notwendig. Die Blasverfahren kann man zusätzlich in Aufblasverfahren und Bodenblasverfahren unterteilen. Zu den Bodenblasverfahren gehören das Bessemer-Verfahren, das Thomas-Verfahren, die Rennfeuer und frühe Hochöfen. Das bekannteste Aufblasverfahren ist das LD-Verfahren.

Beim Linz-Donawitz-Verfahren (kurz LD-Verfahren) werden in den LD-Konverter metallischer Schrott und flüssiges Roheisen eingefüllt und Schlackenbildner hinzugegeben. Über eine Lanze wird Sauerstoff auf die Schmelze geblasen. Dabei verbrennen im Stahl unerwünschte Begleitelemente wie Schwefel, Phosphor, Kohlenstoff usw. und gehen in das Rauchgas oder die Schlacke über. Durch die mit der Verbrennung verbundene enorme Wärmeentwicklung wird der beigegebene Schrott aufgeschmolzen bzw. kann durch Zugabe von Schrott und Erz der Roheiseneinsatz verringert und die Schmelze gekühlt werden. Die Blasdauer beträgt zwischen 10 und 20 Minuten und wird so gewählt, dass die gewünschte Entkohlung und die Verbrennung der unerwünschten Beimengungen sowie die erwünschte Endtemperatur erreicht werden. Der fertige Stahl wird durch Kippen des Konvertergefäßes in Pfannen abgestochen. Erst wird das Stahlbad mit einer Temperatur von mehr als 1.600 °C durch das Abstichloch in eine Pfanne abgestochen, danach wird die Schlacke über den Konverterrand abgegossen.

Der Konverter kann in einer Konvertereinhausung ("Doghouse") angebracht sein, welche verschiebbare Tore aufweist und die Aufgabe haben, die Umgebung vor Auswürfen aus dem Konverter zu schützen, Gasausschwallungen zwischen einem Konvertermund und einem Abgaskühlkamin in den Kühlkamin oder in die Sekundärgasabsaugung zu leiten. Als feuerseitige Auskleidung werden vornehmlich Hämatitplatten eingesetzt; gewisse Zonen erhalten eine feuerfeste Bestampfung oder aber, im Bereich der flexiblen Decke, auch Platten aus hitzebeständigem Stahl.

Die Verbrennung im Konverter setzt aber nicht sofort mit dem Beginn des Einblasens des Sauerstoffs ein, sondern verzögert sich in der Regel um einige Sekunden bis zu 90 Sekunden, um dann spontan zu einem nicht vorbestimmbaren Zeitpunkt einzusetzen. Die Kenntnis des genauen Zeitpunkts der Zündung ist sehr wichtig, weil nur ab diesem Zeitpunkt der Sauerstoff in Reaktion mit der Schmelze tritt und die tatsächliche Dauer dieser Reaktion für die Prozessführung und die Stahlqualität, insbesondere dessen Kohlenstoffgehalt, ausschlaggebend ist. Zusammen mit anderen Parametern ermöglicht der Zeitpunkt der Zündung die Steuerung des Blasvorgangs vom Anfang bis zum Ende. Durch eine genaue Kenntnis des Zeitpunkts der Zündung kann die Qualität des Stahls verbessert werden, und ein erneutes Einblasen von Sauerstoff (Nachblasen) oder ein erneutes Aufkohlen (verbunden mit neuerlichem Schwefeleinsatz) fällt weg. Die Wiederholbarkeit des Blasvorgangs wird verbessert, was sich auch positiv auf die weiteren Schritte der Prozesskette, etwa die Sekundärmetallurgie, auswirkt. Aktuell eingesetzte Verfahren beruhen auf manuellen Eingaben oder nicht absolut verlässlichen automatisierten Systemen. Bisher wurde der Zeitpunkt der Zündung durch den Operator mittels Beobachtung des Konverters bestimmt und somit der Zeitpunkt der Zündung manuell in die Prozesssteuerung eingegeben. Starke Rauch- und Staubentwicklung beeinträchtigen die eindeutige Zünderkennung durch den Operator jedoch, ebenso wie Unerfahrenheit oder eventuelle Unaufmerksamkeit des Operators. Diese Methoden sind aber mit einer Zeitverzögerung zwischen dem tatsächlichen Zeitpunkt der Zündung und der Erfassung des Zeitpunkts der Zündung von mehreren Sekunden, oft bis zu 30 Sekunden, verbunden. Eine derart zeitverzögerte Bestimmung des Zeitpunkts der Zündung ist jedoch für die Prozessführung nachteilig. Zudem kann der Zeitpunkt der Zündung im Nachhinein nicht exakt, sondern nur annähernd bestimmt werden.

Auch die Wärmedehnung im Kopf der Lanze kann zur Bestimmung des Zeitpunkts der Zündung herangezogen werden (mittels Dehnmessstreifen). Dies bedingt jedoch einen hohen technischen Aufwand und ermöglicht nur eine verzögerte Bestimmung des Zeitpunkts der Zündung.

Bei einem geöffneten Doghouse beispielsweise kann das Bedienpersonal direkt die Reaktion einsehen und den Zündzeitpunkt erkennen. Ein geöffnetes Doghouse birgt aber immer ein immenses Sicherheitsrisiko. So kann der Zündzeitpunkt manuell durch Drücken eines Knopfes gesetzt werden. Auch kann durch eine installierte Kamera das Bedienpersonal die Reaktion auf einem Monitor verfolgen.

Ein automatisches optisches Verfahren ist die Verbindung der Kamera-Aufnahme mit einem Auswertesystem, welches das Bildmaterial analysiert und so den Zündzeitpunkt automatisch an das Prozessmodell weitergibt. Die Lösungen mit Videokamera haben jedoch einen hohen Installationsaufwand zur Folge, da die Kamera entsprechend gekühlt und eine nicht verschmutzbare Öffnung also freie Sicht auf den Konverter-Mund garantiert werden muss.

Aus der Patentschrift AT 299 283 B ist bekannt, zur genauen Feststellung des Zündungszeitpunktes die Flammenhelligkeit durch eine Fotozelle, also einer Elektronenröhre im weiteren Sinn, zu messen. Die Fotozelle wird gemäß AT 299 283 B mit ihrer optischen Achse horizontal etwa 10 cm über der Oberkante der Konvertermündung angeordnet, sodass sie bei offener Kaminhaube jene Strahlung detektiert, die zwischen Oberkante der Konvertermündung (Konvertermund) und Unterkante der Kaminhaube (Abzugshaube) austritt. Die Fotozelle wird nun so eingestellt, dass ihr Steuerstrom bei einer Temperatur der anvisierten Reaktionsgase von über etwa 1100°C, vorzugsweise etwa 1200°C, auftritt und damit den Zeitpunkt der Zündung darstellt. Der Steuerstrom der Fotozelle löst die Messung für die vorausbestimmte "metallurgische" Sauerstoffmenge aus.

Nachteilig am Verfahren der AT 299 283 B ist, dass diese nur einen einzigen Datenwert liefert, der für die sichere Zünderkennung des Aufblasverfahrens oft nicht ausreichend ist. Die Fotozelle könnte auch durch eine einmalige Störung, etwa einem einzigen Funken nahe der Fotozelle, ausgelöst werden, obwohl die eigentliche Zündung des Sauerstoffs noch nicht stattgefunden hat.

In der AT 509 866 A4 werden frühestens beginnend mit dem Sauerstoffblasen bzw. Erreichen eines gewissen O₂-Durchflusses mehrere zeitlich aufeinander folgende Bilder des Bereichs zwischen Konvertermund und Abzugshaube mittels eines CCD-Bildsensors aufgenommen und aufgrund der von dem Sensor gemessenen Strahlungsintensität ein Verlauf der Strahlungsintensität über die Zeit bestimmt und jener Zeitpunkt, bei dem eine vorbestimmte Strahlungsintensität oder ein vorbestimmter Anstieg der Strahlungsintensität erreicht wird, als Zeitpunkt der Zündung festlegt.

Es ist daher eine erste Aufgabe der Erfindung, ein Verfahren anzugeben, das eine verlässliche und redundante Bestimmung des Zeitpunkts der Zündung erlaubt. Eine zweite Aufgabe liegt in der Angabe einer Vorrichtung, welche sich insbesondere zum Durchführen des Verfahrens eignet.

Die erste Aufgabe wird gelöst durch die Angabe eines Verfahrens zum Bestimmen des Zeitpunktes der Zündung bei einem Sauerstoffblasverfahren, insbesondere beim LD-Verfahren, in einem Konverter, wobei mit mindestens einem dem Konverter zugeordneten Schallwandler ein akustisches Signal aufgenommen wird, und wobei durch einen Vergleich des akustischen Signals mit einem vorgegebenen Referenzsignal ein Vergleichswert ermittelt wird und jener Zeitpunkt, bei dem der Vergleichswert unterhalb eines vorab festgelegten Grenzwertes liegt, als Zeitpunkt der Zündung festlegt wird.

Die zweite Aufgabe wird gelöst durch die Angabe einer Vorrichtung zum Bestimmen des Zeitpunkts der Zündung bei einem Sauerstoffblasverfahren, insbesondere beim LD-Verfahren, umfassend einen Konverter, wobei mindestens ein dem Konverter zugeordneter Schallwandler vorgesehen ist, welcher ein akustisches Signal aufnimmt, und wobei durch einen Vergleich des akustischen Signals mit einem vorgegebenen Referenzsignal ein Vergleichswert ermittelbar ist und jener Zeitpunkt, bei dem der Vergleichswert unterhalb eines vorab festgelegten Grenzwertes liegt, als Zeitpunkt der Zündung festlegbar ist.

Das erfindungsgemäße Verfahren und die erfindungsgemäße Vorrichtung beruhen auf der akustischen Analyse des Zündgeräusches, das zu Beginn des Blasvorgangs bei einem Konverter entsteht. Das digitalisierte akustische Signal wird durch Vergleich mit einem Referenzsignal ("Gezündeter Zustand") hinsichtlich des Zündgeräusches analysiert/ausgewertet. Dabei ist zu beachten, dass immer der Betrag (Absolutwert) des berechneten Vergleichswerts herangezogen wird. D.h. der Vergleich des akustischen Signals mit dem Referenzsignal wird immer betragsmäßig betrachtet. Die Auswertung selbst bzw. der Vergleich mit dem Referenzsignal erfolgt nach einer FF-Transformation (Fast-Fourier-Transformation) des Signals in einem definierten Frequenzbereich. Eine FFT ist vorteilhaft, da hier nur die das Schallgeräusch charakterisierenden Frequenzen betrachtet werden können, und die Lautstärke selbst nicht in die Auswertung eingeht. Die in einem Stahlwerk herrschenden Störgeräusche (z.B. Hallenabsaugung, Kran, etc.) können somit gezielt gefiltert werden.

Durch die Erfindung ist eine zuverlässige automatische Zündpunkterkennung möglich. Dadurch kann ein exakteres Erreichen der Zielwerte des Prozessmodells bewerkstelligt werden. Zudem ergibt sich eine Reduktion von Nachblaseroutinen sowie eine Einsparung von O₂, welches beim Blasverfahren benötigt wird. Auch können Stahlqualitäten reproduzierbar erzeugt werden. Weiterhin kann die erfindungsgemäße Bestimmung des Zündzeitpunkts mit kostengünstigem Messequipment, z.B. einem Mikrofon oder Hydrophon durchgeführt werden; aufwändige Messapparaturen sind nicht notwendig.

Auch sind durch die Erfindung die Prozessmodelle besser eingestellt, was ebenfalls zu einer Erzeugung von besseren Stahlqualitäten führt. Das Verfahren kann auch der Einfachheit halber in ein bestehendes "Condition Monitoring System" eingebunden werden.

Auch wird durch die Erfindung die Möglichkeit zur Aufzeichnung von allgemeinen "Konvertertönen", durch welche bei Langzeitmessungen neue akustische Messverfahren abgeleitet werden können, gegeben.

In den Unteransprüchen sind weitere vorteilhafte Maßnahmen aufgelistet, die beliebig miteinander kombiniert werden können, um weitere Vorteile zu erzielen.

In bevorzugter Ausgestaltung ist der zumindest eine Schallwandler ein Mikrofon und/oder Hydrophon. Auch ist der zumindest eine Schallwandler in bevorzugter Ausgestaltung am Konverter oder an einer für den Konverter vorgesehenen Konvertereinhausung ("Doghouse") angebracht. Bevorzugt werden mit zumindest einem weiteren dem Konverter zugeordneten Schwallwandler störende Umgebungsgeräusche als akustisches Störsignal aufgenommen.

Als Messaufnehmer dienen ein oder mehrere Schallwandler, wie z.B. Mikrofon oder Hydrophon, welche in der Nähe oder direkt auf dem Konverter positioniert sind. Vorzugsweise sind die Schallwandler so zu platzieren, dass sie von möglichst wenigen Umgebungsgeräuschen beeinflusst werden, aber auch nur so wenig wie möglich der Wärmestrahlung der Flüssigmetallschmelze ausgesetzt werden. Zusätzlich können auch weitere Schallwandler vorgesehen werden, um störende Umgebungsgeräusche zu erfassen, und um diese in weiterer Folge aus dem Nutzsignal (vom A/D-Wandler) filtern zu können.

In einer bevorzugten Ausführung wird das akustische Signal und/oder das Störsignal über einen oder mehrere Verstärker zu einem Wandler oder mehreren Wandlern, insbesondere einem oder mehreren A/D Wandler, zur Digitalisierung geleitet. Dabei können das akustische Signal und/oder das Störsignal vor der Leitung zu einem Wandler oder mehreren Wandlern einem Filter, insbesondere einem Hochpass-/Tiefpassfilter, Maximalpegelfilter, zur Filterung zugeführt werden. D.h. dass das aufgenommene Signal über einen oder mehrere Verstärker zu einem Analog/Digital-Wandler geleitet wird. Optional werden vor der A/D-Wandlung eine Filterung, z.B. eine Hochpassfilterung / Tiefpassfilterung und/oder eine Maximalpegelfilterung, vorgenommen.

Bevorzugt wird zumindest das digitalisierte Signal an eine Recheneinheit mit zumindest einem Auswertungsalgorithmus zum Ermitteln des Vergleichswerts und Bestimmung einer erfolgten Zündung übermittelt. D.h. dass der A/D-Wandler die digitalisierten Signale in einem Computersystem bereitstellt. Das digitalisierte akustische Signal wird im Computersystem von einem Auswertungsalgorithmus ausgewertet.

In einem bevorzugten Ausführungsbeispiel wird der Auswertungsalgorithmus in der Recheneinheit abhängig von der aktuell aktiven Prozessphase aktiviert, insbesondere erst mit Beginn des Sauerstoffblasens oder nur während des Sauerstoffblasens. So kann durch eine Rückmeldung von der aktuell aktiven Prozessphase die Auswertung abhängig davon aktiv geschalten werden. So ist der Algorithmus beim Chargieren, Nachblasen, Abstechen, usw. inaktiv, beim Blasen hingegen aktiv.

Bevorzugt gibt die Recheneinheit den Zündzeitpunkt an ein Prozessmodell und/oder an ein Visualierungsgerät im Leitstand weiter, insbesondere online weiter, so dass ein vorhandenes Bedienpersonal den Zündverlauf akustisch und/oder visuell mit verfolgt. Das Computersystem übermittelt daher den exakten Zeitpunkt der Zündung an das Prozessmodell bzw. an ein Visualisierungsgerät im Leitstand. Weiterhin ist es auch möglich einen Online Audio Stream an den Leitstand zu übermitteln, durch welchen ein vorhandenes Personal im Leitstand den Zündverlauf visuell als auch akustisch mit verfolgen kann.

Bevorzugt wird zusätzlich neben dem akustischen Signal der Schallpegel bei der Bestimmung des Zündzeitpunkts als Zusatzsignal herangezogen. Als das Referenzsignal für den Schallpegel wird zumindest der Referenzschallpegel bei Zündung, insbesondere ein Referenzschallpegelbereich bei Zündung, herangezogen. Auch kann zusätzlich neben dem akustischen Signal der zeitliche Schallpegelverlauf bei der Bestimmung des Zündzeitpunkts als Zusatzsignal herangezogen werden. Als das Referenzsignal für den zeitlichen Schallpegelverlauf kann zumindest der zeitliche Referenzschallpegelverlauf bei Zündung, insbesondere ein zeitlicher Referenzschallpegelverlaufsbereich bei Zündung, herangezogen werden. Auch ist es möglich, dass zusätzlich neben dem akustischen Signal charakteristische Frequenzen bei der Bestimmung des Zündzeitpunkts als Zusatzsignal herangezogen werden und als das Referenzsignal für die charakteristische Frequenzen zumindest charakteristische Referenzfrequenzen bei Zündung, insbesondere einen charakteristische Referenzfrequenzenbereich bei Zündung. Zudem ist es möglich, dass zusätzlich neben dem akustischen Signal der Pegel- und Frequenzverlauf bei der Bestimmung des Zündzeitpunkts als Zusatzsignal herangezogen werden und als das Referenzsignal für den Pegel- und Frequenzverlauf zumindest der Referenzpegel- und Referenzfrequenzverlauf bei Zündung, insbesondere ein Referenzpegel- und Referenzfrequenzverlaufsbereich bei Zündung.

Im Computersystem können daher mehrere Auswertungsalgorithmen einen Satz an Zusatzsignalen bewerten. Neben dem Vergleich des akustischen Signals mit einem Referenzsignal kann der Auswertungsalgorithmus daher auch auf folgenden Zusatzsignalen beruhen: Vergleich des Schallpegels mit einem Referenzschallwert, Vergleich des zeitlichen Schallpegelverlaufs mit einer Referenzschallpegelkurve, Vergleich charakteristischer Frequenzen, welche z.B. durch Fast-Fourier-Transformation (FFT) bereitgestellt werden und/oder Vergleich des Pegel- und Frequenzverlaufs mit einen analogen Referenzmodell, welches mittels z.B. Machine Learning oder eines neuronalen Netzwerks erstellt wird. Dies kann zu einer noch genaueren Bestimmung des Zündzeitpunkts beitragen.

In einer bevorzugten Ausführung werden zusätzlich neben dem akustischen Signal ein oder mehrere gewichtete Zusatzsignale für die Berechnung des Zündzeitpunkts herangezogen, wobei auch das akustische Signal selber eine Gewichtung aufweisen kann. D.h. dass das Gesamtergebnis z.B. durch einen gewichteten Abstimmungsalgorithmus erfolgen kann. Den einzelnen Bewertungsalgorithmen sind dabei je nach Aussagekraft verschiedene Gewichtungen zugeteilt.

Bevorzugt erfolgt die Berechnung des Grenzwertes durch ein selbstlernendes System oder ein neuronales Netz. Auch kann eine Aktualisierung des Grenzwertes manuell durch das Bedienpersonal erfolgen. Auch kann eine Datenbank mit mehreren Grenzwerten generiert werden, die auf die Charge abgestimmt ist. Diese kann in gewissen Abständen aktualisiert werden. Auch andere Berechnungen sind jedoch möglich. Um evtl. fehlerhaft erkannte Zündzeitpunkte zu verifizieren, können die akustischen Messdateien in Form von mp3 Daten, oder in jedem anderen beliebigen Format (komprimiert oder auch nicht) in einer Datenbank zur Analyse abgespeichert werden.

Auch kann eine Kamera mit einem Sensor vorgesehen sein, der mehrere Fotodioden enthält, vorzugsweise mit einem CCD-Bildsensor oder CMOS Sensor, wobei die Kamera mit ihrer optischen Achse auf einem Spalt zwischen einem Konvertermund und einer Abzugshaube ausgerichtet ist, sowie einen Rechner zur Auswertung der Bilder der Kamera, wobei der Rechner so programmiert ist, dass er aufgrund der von den Sensoren aufgenommenen Strahlungsintensität einen Verlauf der Strahlungsintensität über die Zeit bestimmt. Frühestens (weil sonst gegebenenfalls andere, nicht von der Zündung stammende Flammen noch hell lodern) beginnend mit dem Sauerstoffblasen (etwa beim Erreichen eines gewissen Sauerstoff-Durchflusses) werden mehrere zeitlich aufeinander folgende Bilder desselben Bereichs zwischen Konvertermund und Abzugshaube mittels eines Sensors, der mehrere, jeweils einem Bildpunkt entsprechende Fotodioden enthält, vorzugsweise mittels eines CCD-Bildsensors, aufgenommen werden, aufgrund der von den Fotodioden gemessenen Strahlungsintensität ein Verlauf der Strahlungsintensität über die Zeit bestimmt wird und jener Zeitpunkt, bei dem eine vorbestimmte Strahlungsintensität oder ein vorbestimmter Anstieg der Strahlungsintensität erreicht wird, als Zeitpunkt der Zündung festlegt wird. Beide Vorrichtungen/Verfahren können zum Bestimmen des Zündungszeitpunkts auch miteinander verknüpft werden. Die Verbindung der beiden Verfahren liefert ein noch weiter verbessertes Ergebnis für den Zündzeitpunkt.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
FIG 1: sehr schematisch eine erfindungsgemäße Vorrichtung,
FIG 2: sehr schematisch das erfindungsgemäße Verfahren.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

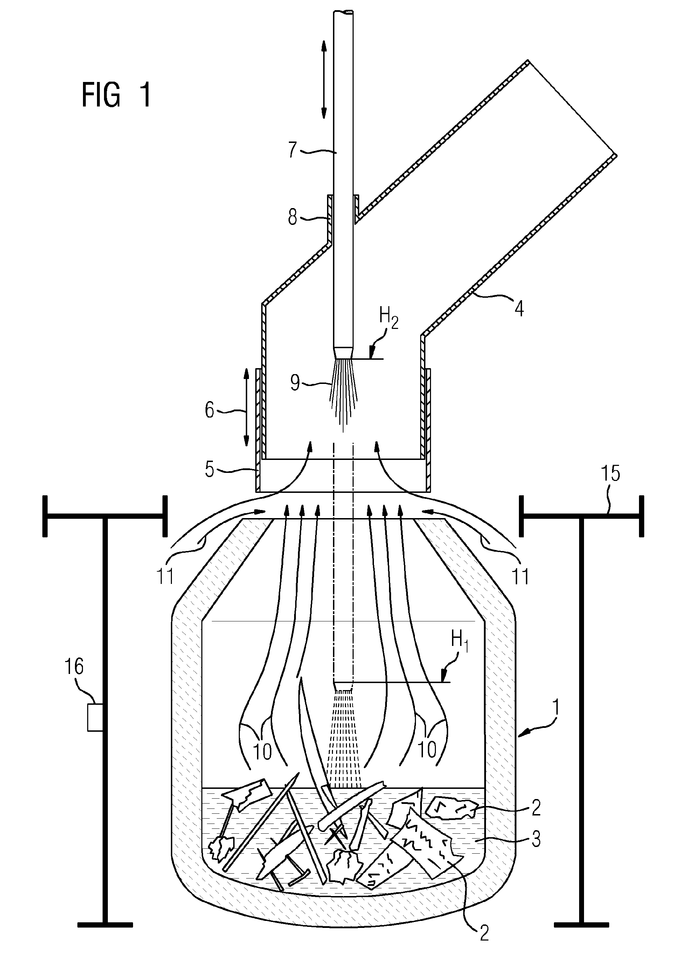

In FIG 1 ist der Konverter 1 dargestellt, in welchem sich der zu frischende Einsatz befindet, nämlich Schrott und stückiges Roheisen 2 sowie flüssiges Roheisen 3. Über dem Konvertermund, zu dem sich der Konverter 1 nach oben hin verjüngt, ist der Abgaskamin 4 angeordnet. Eine Abzugshaube 5, welche entlang des Doppelpfeils 6 abgesenkt bzw. angehoben werden kann, umgibt den Abgaskamin 4. Sie dient zum Abdichten des Konvertermunds und zum Auffangen der Frischgase während des Frischens. Die heb- und senkbare Lanze 7 wird durch die Öffnung 8 des Abgaskanals 4 in den Konverter 1 eingeführt. Der Konverter 1 kann in einer Konvertereinhausung ("Doghouse") 15 angebracht sein, welche verschiebbare Tore (nicht gezeigt) aufweist und die Aufgabe hat, die Umgebung vor Auswürfen aus dem Konverter zu schützen, Gasausschwallungen zwischen einem Konvertermund und einem Abgaskühlkamin 4 in diesen Abgaskühlkamin 4 oder in die Sekundärgasabsaugung zu leiten.

Die Lanze 7 senkt sich von der Position H₂, in welcher die Lanze 7 mit durchgehenden Strichen gezeichnet ist und wo die Sauerstoffzufuhr noch nicht geöffnet ist, bis zur Betriebsposition H₁ ab. Bereits kurz vor Erreichen der Betriebsposition H₁ wird die Sauerstoffzufuhr geöffnet und der zum Blasen benötigte Sauerstoff 9 tritt aus. Die Lanze 7 wird weiter abgesenkt, während Sauerstoff 9 aus der Mündung austritt, bis sie die Betriebsposition H₁ erreicht, welche strichpunktiert dargestellt ist. Bei Erreichen der Betriebsposition H₁ sollte die Zündung erfolgen, wenn keine Zündverzögerung auftritt. Wenn jedoch die Zündung durch überstehenden Schrott oder dergleichen verzögert wird, strömt eine Menge Sauerstoff aus, die an der Frischreaktion nicht teilnimmt, und sehr wohl berücksichtigt werden muss.

Erfolgt die Zündung, so steigen die Reaktionsgase 10 aus dem Konverter 1 auf, die vorwiegend aus Kohlenmonoxid (CO) bestehen. Die Abzugshaube 5 ist dann, wie in FIG 1 dargestellt, offen, sodass sogenannte Falschluft 11 durch den Spalt zwischen Abzugshaube 5 und Konverter 1 bzw. dessen Konvertermund einströmt. Das Kohlenmonoxid der Reaktionsgase 10 verbrennt mit Luft. Die mit der Zündung beginnende Verbrennung des Blasesauerstoffs mit dem Kohlenstoff aus dem Roheisen erzeugt weiß leuchtende Flammen bzw. Gase.

Bei dem Sauerstoffblasverfahren wird mit hohem Druck (bis 12bar) Sauerstoff auf das Metallbad aufgeblasen. In einer heftigen Reaktion oxidiert der Sauerstoff das Eisen zu Eisenoxid und der Kohlenstoff zu Kohlenmonoxid (CO), wobei das Eisenoxid den Sauerstoff sofort an die Eisenbegleiter weiter gibt. Im Reaktionszentrum, dem Brennfleck, entstehen Temperaturen von 2500 bis 3000°C und eine lebhafte umlaufende Badbewegung, die auch noch während des Prozesses noch nicht gefrischte Teile des Bades an den Brennfleck heranführt.

Zur exakten Prozessführung durch die Prozessmodelle ist eine exakte Erkennung des Zündzeitpunkts von immenser Wichtigkeit. Ab diesem Zeitpunkt beginnt das von der Blaselanze aufgeblasene O₂ mit der Flüssigmetallschmelze zu reagieren. Wird dieser Zeitpunkt nicht richtig erkannt, kann es zu Folgen wie beispielsweise einem nicht exakten Erreichen der Zielwerte des Prozessmodells kommen. Auch können Nachblase-Routinen benötigt werden.

Auch kann ein erhöhter O₂-Verbrauch durch "Nachblasen" vorkommen. Als weitere Folge eines nicht richtig erkannten Zeitpunkts können auch Stahlqualitäten nicht reproduzierbar erzeugt werden. Auch kann vom Prozess erzeugtes CO-Gas nicht verwertet werden - es kommt zur Vollverbrennung.

Auch kann es zu einem erhöhten Explosionsrisiko bei der Sekundärentstaubung kommen, da durch die Schlauchfilteranlagen zündbares Gas geführt wird. Zudem beruhen die aktuell eingesetzten Verfahren auf manuellen Eingaben oder nicht absolut verlässlichen automatisierten Systemen.

Die Schwierigkeiten im Zusammenhang mit einer visuellen Zünderkennung durch den Operator beim LD-Prozess sind daher hinlänglich bekannt: keine oder schlechte Reproduzierbarkeit, erfahrene" Tiegelfahrer" sind notwendig, offenes Doghouse zu Beginn der Blasphase ist notwendig, was ein potentielles Sicherheitsrisiko darstellt etc.. Falls kein Zündsignal seitens des Operators kommt, kann dies zu einer erhöhten Belastung des Abzugkamins führen. Bei manchen Anlagen wird dann das Zündsignal nach einer hinreichend langen Zeit automatisch generiert, wobei es sich hierbei um ein stark verzögertes Signal im Vergleich zum tatsächlichen Zündzeitpunkt handelt.

Diese Probleme werden mithilfe der Erfindung nun vermieden.

Das vorgeschlagene Verfahren beruht auf der akustischen Analyse des Zündgeräusches, das zu Beginn des Blasvorgangs bei einem Konverter 1 entsteht.

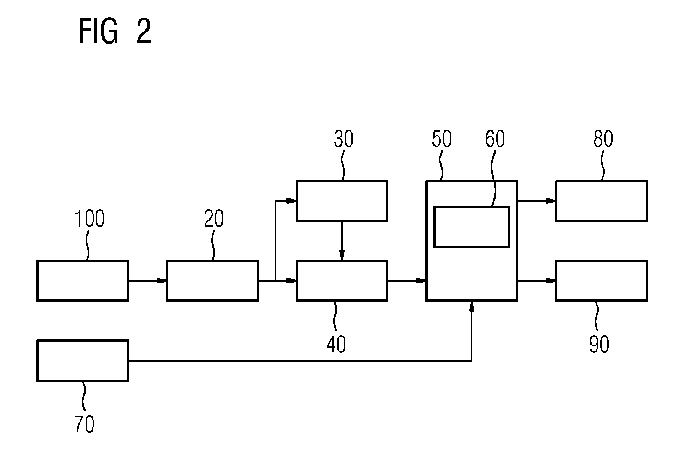

In FIG 2 wird das Verfahren schematisch aufgezeigt. Als Messaufnehmer dienen ein oder mehrere Schallwandler 100, wie z.B. Mikrofon (16) (FIG 1) oder Hydrophon, welche in der Nähe oder direkt auf dem Konverter 1 positioniert sind. Hier sind die Schallwandler direkt auf den Konvertereinhausungen 15 platziert. Vorzugsweise sind die Schallwandler 100 so zu platzieren, dass sie von möglichst wenigen Umgebungsgeräuschen beeinflusst werden, aber auch nur so wenig wie möglich der Wärmestrahlung der Flüssigmetallschmelze ausgesetzt werden. Zusätzlich können auch weitere Schallwandler (nicht gezeigt) vorgesehen werden, um störende Umgebungsgeräusche zu erfassen, um diese in weiterer Folge aus dem Nutzsignal (vom Analog/Digital-Wandler) filtern zu können. Das aufgenommene Signal wird über einen oder mehrere Verstärker 20 zu einem Analog/Digital-Wandler 40 geleitet. Optional wird vor der A/D-Wandlung eine Filterung mittels eines Filters 30 wie Hochpassfilter/Tiefpassfilter oder, Maximalpegelfilter, vorgenommen. Der A/D-Wandler 40 stellt die digitalisierten Signale in einem Computersystem 50 bereit. Das digitalisierte akustische Signal wird im Computersystem 50 von einem Auswertungsalgorithmus 60 ausgewertet. Die Analyse/Auswertung des digitalisierten akustischen Signals hinsichtlich des Zündgeräusches erfolgt durch einen Vergleich, insbesondere einem Soll/Ist Vergleich mit einem Referenzsignal ("Gezündeter Zustand"). Dabei wird bei dem so ermittelten Vergleichswert immer der Absolutbetrag (Betrag) dieses ermittelten Vergleichswertes betrachtet. Die Auswertung selbst bzw. der Vergleich mit dem Referenzsignal erfolgt nach einer FF-Transformation (Fast-Fourier-Transformation=FFT) des Signals in einem definierten Frequenzbereich. Eine FFT ist vorteilhaft, da hier nur die das Schallgeräusch charakterisierenden Frequenzen betrachtet werden können, und die Lautstärke selbst nicht in die Auswertung eingeht. Die in einem Stahlwerk herrschenden Störgeräusche (z.B. Hallenabsaugung, Kran, etc.) können somit gezielt gefiltert werden. Liegt dabei der ermittelte Vergleichswert unterhalb eines Grenzwertes, wird dies als Zündzeitpunkt herangezogen. Dabei wird der Grenzwert empirisch an der jeweiligen Konverteranlage bestimmt. Auch kann ein selbstlernendes System zur Bestimmung des Grenzwertes, wie z.B. einem neuronalen Netz herangezogen werden. Auch kann als Referenzsignal ein Bereich, in dem der akustische Zündzeitpunkt liegt, herangezogen werden. Der Grenzwert kann dabei in vorgegebenen Abständen manuell aktualisiert werden.

Neben dem Vergleich des akustischen Signals mit einem Referenzsignal kann der Auswertungsalgorithmus 60 beispielsweise mehrere andere Zusatzsignale bekommen und zur Bestimmung des Zündzeitpunkts auswerten: So kann beispielsweise auch der Schallpegel mit einem Referenzschallpegelwert verglichen werden.

Auch kann zusätzlich der zeitliche Schallpegelverlauf mit einer Referenzkurve zur Bestimmung des Zündzeitpunkts herangezogen werden. Auch kann ein Vergleich charakteristischer Frequenzen z.B. durch Fast-Fourier-Transformation (FFT) mit dem entsprechenden Referenzfrequenzen herangezogen werden. Auch kann das Referenzmodell mittels Machine Learning oder eines neuronalen Netzwerks ermittelt werden, und dann mit dem entsprechenden Pegel- und Frequenzverlauf verglichen werden. Auch können diese zusätzlichen neben dem akustischen Signal herangezogenen weiteren Zusatzsignale gewichtet werden, um anschließend zur Berechnung des Zündzeitpunkts verwendet zu werden. Auch kann das akustische Signal selber gewichtet in diese Berechnung mit einfließen. D.h. dass im Computersystem 50 auch mehrere Auswertungsalgorithmen 60 diesen Satz mit den verschiedenen Signalen an Eingabedaten bewerten können. Das Gesamtergebnis kann z.B. durch einen gewichteten Abstimmungsalgorithmus erfolgen. Den einzelnen Bewertungsalgorithmen sind dabei je nach Aussagekraft verschiedene Gewichtungen zugeteilt.

Durch eine Rückmeldung von der aktuell aktiven Prozessphase 70 kann die Auswertung abhängig davon aktiv geschalten werden.

So kann der Algorithmus 60 beim Chargieren, Nachblasen, Abstechen, usw. inaktiv, beim Blasen hingegen aktiv geschaltet werden. Das Computersystem 50 übermittelt den exakten Zeitpunkt der Zündung an das Prozessmodell 80 bzw. an ein Visualisierungsgerät im Leitstand 90. Des Weiteren ist es auch möglich einen Online Audio Stream an den Leitstand 90 zu übermitteln, mittels dessen das Personal im Leitstand 90 den Zündverlauf visuell als auch akustisch mit verfolgen. Um evtl. fehlerhaft erkannte Zündzeitpunkte zu verifizieren, können die akustischen Messdateien in Form von mp3 Daten, oder in jedem anderen beliebigen Format (komprimiert oder auch nicht) in einer Datenbank zur Analyse abgespeichert werden.

Die Nachteile im Stand der Technik werden nun erfindungsgemäß vermieden.

## Patentansprüche

1. Verfahren zum Bestimmen des Zeitpunktes der Zündung bei einem Sauerstoffblasverfahren, insbesondere beim LD-Verfahren, in einem Konverter (1),
**dadurch gekennzeichnet, dass** mit mindestens einem dem Konverter (1) zugeordneten Schallwandler (100) ein akustisches Signal aufgenommen wird, und wobei durch einen Vergleich des akustischen Signals mit einem vorgegebenen Referenzsignal ein Vergleichswert ermittelt wird und jener Zeitpunkt, bei dem der Vergleichswert unterhalb eines vorab festgelegten Grenzwertes liegt, als Zeitpunkt der Zündung festlegt wird.

2. Verfahren nach Anspruch 1,
**dadurch gekennzeichnet, dass** mit zumindest einem weiteren dem Konverter (1) zugeordneten Schwallwandler (100) störende Umgebungsgeräusche als akustisches Störsignal aufgenommen werden.

3. Verfahren nach einem der Ansprüche 1 oder 2,
**dadurch gekennzeichnet, dass** das akustische Signal und/oder das Störsignal über einen oder mehrere Verstärker (20) zu einem Wandler oder mehreren Wandlern, insbesondere einem oder mehreren A/D-Wandlern (40), zur Digitalisierung geleitet wird.

4. Verfahren nach Anspruch 3,
**dadurch gekennzeichnet, dass** das akustische Signal und/oder das Störsignal vor der Leitung zu einem Wandler oder mehreren Wandlern einem Filter (30), insbesondere einem Hochpass-/Tiefpassfilter, Maximalpegelfilter, zur Filterung zugeführt werden.

5. Verfahren nach Anspruch 3 oder 4,
**dadurch gekennzeichnet, dass** zumindest das digitalisierte Signal an eine Recheneinheit mit zumindest einem Auswertungsalgorithmus (60) zum Ermitteln des Vergleichswerts und Bestimmung einer erfolgten Zündung übermittelt wird.

6. Verfahren nach Anspruch 5,
**dadurch gekennzeichnet, dass** der Auswertungsalgorithmus (60) in der Recheneinheit abhängig von der aktuell aktiven Prozessphase (70) aktiviert wird, insbesondere erst mit Beginn des Sauerstoffblasens oder nur während des Sauerstoffblasens.

7. Verfahren zum Bestimmen des Zeitpunkts der Zündung nach einem der Ansprüche 4-6,
**dadurch gekennzeichnet, dass** die Recheneinheit den Zündzeitpunkt an ein Prozessmodell (80) und/oder an ein Visualierungsgerät im Leitstand (90) weitergibt, insbesondere online weitergibt, so dass ein vorhandenes Bedienpersonal den Zündverlauf akustisch und/oder visuell mit verfolgt.

8. Verfahren nach einem der vorhergehenden Ansprüche,
**dadurch gekennzeichnet, dass** zusätzlich neben dem akustischen Signal der Schallpegel bei der Bestimmung des Zündzeitpunkts als Zusatzsignal herangezogen wird und als das Referenzsignal für den Schallpegel zumindest der Referenzschallpegel bei Zündung, insbesondere einen Referenzschallpegelbereich bei Zündung, herangezogen wird.

9. Verfahren nach einem der vorhergehenden Ansprüche,
**dadurch gekennzeichnet, dass** zusätzlich neben dem akustischen Signal der zeitliche Schallpegelverlauf bei der Bestimmung des Zündzeitpunkts als Zusatzsignal herangezogen wird, und das Referenzsignal für den zeitlichen Schallpegelverlauf zumindest der zeitlichen Referenzschallpegelverlauf bei Zündung, insbesondere ein zeitlicher Referenzschallpegelverlaufbereich bei Zündung, herangezogen wird.

10. Verfahren nach einem der vorhergehenden Ansprüche,
**dadurch gekennzeichnet, dass** zusätzlich neben dem akustischen Signal charakteristische Frequenzen bei der Bestimmung des Zündzeitpunkts als Zusatzsignal herangezogen werden und als das Referenzsignal für die charakteristischen Frequenzen zumindest charakteristische Referenzfrequenzen bei Zündung, insbesondere einen charakteristischen Referenzfrequenzenbereich bei Zündung, herangezogen wird.

11. Verfahren nach einem der vorhergehenden Ansprüche,
**dadurch gekennzeichnet, dass** zusätzlich neben dem akustischen Signal der Pegel- und Frequenzverlauf bei der Bestimmung des Zündzeitpunkts als Zusatzsignal herangezogen wird und als das Referenzsignal für den Pegel- und Frequenzverlauf zumindest der Referenzpegel- und Referenzfrequenzverlauf bei Zündung, insbesondere ein Referenzpegel- und Referenzfrequenzverlaufbereich bei Zündung, herangezogen wird.

12. Verfahren nach einem der vorhergehenden Ansprüche,
**dadurch gekennzeichnet, dass** zusätzlich für die Berechnung des Zündzeitpunkts neben dem akustischen Signal ein oder mehrere gewichtete Zusatzsignale nach den Ansprüchen 8-11 herangezogen werden, wobei auch das akustische Signal selber eine Gewichtung aufweisen kann.

13. Verfahren nach einem der vorhergehenden Ansprüche,
**dadurch gekennzeichnet, dass** die Berechnung des Grenzwertes durch ein selbstlernendes System oder ein neuronales Netz und/oder empirisch erfolgt.

14. Vorrichtung zum Bestimmen des Zeitpunkts der Zündung bei einem Sauerstoffblasverfahren, insbesondere beim LD-Verfahren, umfassend einen Konverter (1), **dadurch gekennzeichnet, dass** mindestens ein dem Konverter (1) zugeordneter Schallwandler (100) vorgesehen ist, welcher ein akustisches Signal aufnimmt, und wobei durch einen Vergleich des akustischen Signals mit einem vorgegebenen Referenzsignal ein Vergleichswert ermittelbar ist und jener Zeitpunkt, bei dem der Vergleichswert unterhalb eines vorab festgelegten Grenzwertes liegt als Zeitpunkt der Zündung festlegbar ist.

15. Vorrichtung zum Bestimmen des Zeitpunkts der Zündung bei einem Sauerstoffblasverfahren nach Anspruch 14,
**dadurch gekennzeichnet, dass** zumindest ein weiterer dem Konverter (1) zugeordneter Schwallwandler vorgesehen ist, welcher störende Umgebungsgeräusche als akustisches Störsignal aufnimmt.

16. Vorrichtung nach Anspruch 15,
**dadurch gekennzeichnet, dass** ein oder mehrere Verstärker (20) sowie ein oder mehrere Wandler, insbesondere ein oder mehrere A/D Wandler vorgesehen sind, zum Leiten des akustischen Signals und/oder des Störsignals zur Digitalisierung über den oder die Verstärker (20) zu dem Wandler oder die Wandler.

17. Vorrichtung nach Anspruch 16,
**dadurch gekennzeichnet, dass** ein Filter (30) insbesondere ein Hochpass-/Tiefpassfilter, Maximalpegelfilter, zur Filterung vorgesehen ist zum Leiten des akustisches Signals und/oder des Störsignals vom Verstärker vor der Leitung zu dem oder den Wandlern.

18. Vorrichtung nach Anspruch 16 oder 17,
**dadurch gekennzeichnet, dass** eine Recheneinheit mit zumindest einem Auswertungsalgorithmus (60) vorgesehen ist zum Ermitteln des Vergleichswerts und Bestimmung einer erfolgten Zündung.

19. Vorrichtung nach einem der vorhergehenden Ansprüche,
**dadurch gekennzeichnet, dass** der zumindest eine Schallwandler (100) ein Mikrofon (16) und/oder Hydrophon ist.

20. Vorrichtung nach einem der vorhergehenden Ansprüche,
**dadurch gekennzeichnet, dass** der zumindest eine Schallwandler (100) am Konverter (1) oder an einer für den Konverter (1) vorgesehenen Konvertereinhausung (15) angebracht ist.

21. Vorrichtung nach einem der vorhergehenden Ansprüche,
**dadurch gekennzeichnet, dass** eine Datenbank vorgesehen ist, zur Speicherung fehlerhaft erkannter Zündzeitpunkte.

22. Vorrichtung nach einem der vorhergehenden Ansprüche 14-21, zum Durchführen des Verfahrens nach einem der Ansprüche 1-13.
